(19) Europäisches Patentamt
European Patent Office
Office européen des brevets

(11) Veröffentlichungsnummer: **0 216 335**
**B1**

(12) # EUROPÄISCHE PATENTSCHRIFT

(45) Veröffentlichungstag der Patentschrift: **16.08.90**

(51) Int. Cl.[5]: **C09D 9/00**, C09D 9/04

(21) Anmeldenummer: **86112979.9**

(22) Anmeldetag: **19.09.86**

(54) **Abbeizpaste zum Entfernen von Lack- und Farbschichten.**

(30) Priorität: **26.09.85 DE 3534278**

(43) Veröffentlichungstag der Anmeldung: **01.04.87 Patentblatt 87/14**

(45) Bekanntmachung des Hinweises auf die Patenterteilung: **16.08.90 Patentblatt 90/33**

(84) Benannte Vertragsstaaten: **AT BE CH DE FR GB IT LI NL SE**

(56) Entgegenhaltungen: **DE-A-1 546 126**

(73) Patentinhaber: **Henkel Kommanditgesellschaft auf Aktien, Postfach 1100 Henkelstrasse 67, D-4000 Düsseldorf-Holthausen(DE)**

(72) Erfinder: **Eberhardt, Werner, Am Sonnenhang 1, D-5653 Leichlingen 2(DE)**
Erfinder: **Ziegler, Rudolf, Gestiefelter Kater, D-5067 Kürten(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft eine Abbeizpaste zum Entfernen von Lack- und Farbschichten auf Basis von schwerflüchtigen und wenig toxischen Lösungsmitteln mit einem Gehalt an sich bekannten Verdickungsmitteln.

Abbeizmittel zum Abbeizen von Lacken und Dispersionsfarben auf Basis von polaren und unpolaren Lösungsmitteln gemeinsam mit einem oder mehreren Verdickungsmitteln sind bekannt. Dabei können als Verdickungsmittel Wachse oder wachsartige Substanzen verwendet werden, die in schmelzflüssigem Zustand in die Lösungsmittel eingearbeitet werden. Zusätzlich zu diesen Wachsen können auch andere bekannte Verdickungsmittel mitverwendet werden, beispielsweise solche auf Basis von natürlichen oder synthetischen Aluminiumsilikaten. Der Gehalt an schmelzflüssig eingerührtem Wachs bzw. wachsartigen Anteilen soll bis etwa 10 Gewichtsteile betragen, wobei gleichzeitig 20 bis 30 Gewichtsteile eines sogenannten unpolaren Lösungsmittels vorhanden sein sollen.

Derartige bekannte Abbeizmittel erfüllen aber nicht in jeder Hinsicht die an sie gestellten Forderungen. Insbesondere ist die Mitverwendung solcher Lösungsmittel in größeren Mengen erforderlich, die aufgrund ihrer spezifischen Eigenschaften eine Belastung für die unmittelbare Umgebung oder auch für das Abwasser darstellen.

Aufgabe war es daher, solche Abbeizpasten zu entwickeln, die einerseits eine einwandfreie und leichte Entfernung von Lackschichten der verschiedensten Art und auch eine Entfernung von Dispersionsfarben auf Basis synthetischer oder natürlicher Kautschuklatices sowie auch die Reste von Klebstoffen gestatten, andererseits aber nur eine relativ geringe Beeinträchtigung für die umgebende Luft und eine vertretbare Belastung für das Abwasser bedeuten.

Gegenstand der Erfindung ist eine Abbeizpaste zum Entfernen von Lackschichten auf Basis von schwerflüchtigen, wenig toxischen Lösungsmitteln sowie Verdickungsmitteln auf Basis von Fettsäuresalzen, dadurch gekennzeichnet, daß es besteht aus

a) 94 - 66, insbesondere 88 - 72 Gew.-% eines Diethylenglykolmonoalkylethers der allgemeinen Formel
$R - O - CH_2CH_2 - O - CH_2CH_2 - OH$,
wobei R ein Ethyl- oder Propylrest ist sowie
b) 1 - 4, insbesondere 1,5 - 3 Gew.-% des Natriumsalzes einer $C_{14}$-$C_{18}$-Fettsäure sowie
c) 5 - 30, insbesondere 10 - 25 Gew.-% Wasser und
d) gegebenenfalls bis zu 5 Gew.-% an nichtionogenen oder anionaktiven Netzmitteln und weiteren üblichen verdickenden Hilfsstoffen.

Die Verwendung relativ großer Mengen von Diethylenglykolmonoalkylether der vorstehend bezeichneten Formel ist für die vorliegende Erfindung besonders charakteristisch. Wenn R ein Ethyl- oder ein Propylrest darstellt, so wird das erfindungsgemäße Resultat ohne weiteres erreicht. Ist der Rest jedoch länger- oder kurzkettiger, so wird entweder die Abbeizwirkung geringer, also für den Fall, daß R ein Methylrest ist. Auch ist die Flüchtigkeit des Methylethers zu groß, um noch eine genügende Wirkungsdauer zu entfalten. Wenn R einen längeren Alkylrest oder gar einen Arylrest darstellt, nimmt die Anwendungsbreite der Abbeizfähigkeit gegenüber verschiedenartiger Überzüge ab. Wesentlich ist ferner, daß noch die freie OH-Gruppe vorhanden ist, d.h. sie darf weder verethert noch verestert sein, so wie dies bei vielen anderen bekannten Lösungsmitteln ähnlicher Struktur der Fall ist, die sich prinzipiell auch als Lacklösungsmittel eignen und daher für die Zwecke des Abbeizens zumindest theroretisch geeignet sind. Jedoch ist der Angriff auf die Lackschicht nicht so gut, d.h. universell, wie dies bei den erfindungsgemäß einzusetzenden speziellen Ethyl- bzw. Propylethern des Dieethylenglykols der Fall ist.

Selbstverständlich ist es möglich, für besondere Zwecke in den erfindungsgemäßen Systemen auch andere organische Lösungsmittel mitzuverwenden. Zu diesen zählen unter anderem auch solche, die ähnlich wie der Monoalkylether des Diethylenglykols aufgebaut sind und anstelle der OH-Gruppe, beispielsweise eine weitere Alkoxygruppe tragen oder aber anstelle der OH-Gruppe einen anderen Substituenten. Typische Beispiele für derartige Verbindungen sind Monoalkyl($C_2$-$C_6$)ether des Diethylenglykolacetats und oder -propionats. Dabei ist jedoch zu beachten, daß derartige Mittel nur in sehr untergeordneter, etwa 5 bis 10 % nicht übersteigenden Mengen eingesetzt werden können, weil sonst die vorteilhaften Eigenschaften der universellen, guten Abbeizwirkung sowie der relativ geringen Unschädlichkeit für die Umgebung nicht mehr gegeben sind.

Bezüglich der Natriumsalze der Fettsäuren ist festzustellen, daß man mit einer Menge von 1 bis 4 %, bezogen auf das gesamte Abbeizmittel ohne weiteres die gewünschte verdickende Wirkung erzielt. Es kann natürlich auch eine etwas höhere Menge eingesetzt werden, jedoch ist das Natriumsalz keinesfalls bezüglich seiner verdickenden Wirkung durch etwa das Triethanolaminsalz oder aber das Kaliumsalz zu ersetzen. Die Fettsäuren können in gewissem Maße bis zu etwa 20 bis 50 % der Kohlenstoff-Bindungen ungesättigt sein. Diese Grenze sollte nicht überschritten werden, weil sonst die verdickende Wirkung deutlich nachläßt. Dies hat ein leichtes Ablaufen der fertigen Paste von senkrechten Oberflächen zur Folge.

Schließlich ist es auch möglich, zusätzlich nichtionogene oder anionenaktive Netzmittel zu den drei als wesentlich genannten Verbindungen zu verwenden. Sie sollen jedoch einen Gehalt an 5 Gew.-% bezogen auf die drei wesentlichen Bestandteile nicht überschreiten. Handelsübliche nichtionogene und anionenaktive Netzmittel sind bevorzugt. In Sonderfällen ist die Verwendung von quaternären Gruppen enthaltenden Netzmitteln möglich. Dabei ist aber insbesondere an die häufig gegebenen, andersartigen Nebenwirkungen zu denken. Besondere Vorteile bringen diese kationische Gruppen enthaltenden Netzmittel bezüglich der Abbeizwirkung nur in speziellen Fällen.

Als weitere Wirkstoffe kann ein gewisser Überschuß von Alkali vorhanden sein, den man insbesondere in Form von überschüssiger Natronlauge, Kalilauge, Kaliumcarbonat, Natriumcarbonat oder dergleichen zusetzen kann. Die Mitverwendung von Calciumhydroxid ist nicht im empfehlenswert, weil in diesem Falle unlösliche Kalksalze ausgeschieden werden und die verdickende Wirkung der Natriumsalze der $C_{14}$-$C_{18}$-Fettsäuren gemindert wird.

Zusätzlich als Hilfsmittel sind weiterhin an sich bekannte verdickende Systeme möglich, die auf Silikaten natürlicher oder synthetischer Art, beispielsweise auf Basis von Montmorillonit oder Bentonit beruhen. Auch ist der Zusatz von gefällter oder durch Dampfphasenhydrolyse gewonnener Kieselsäure möglich. Ferner kann man zusätzlich organische höhermolekulare Verbindungen zur Verbesserung der Verlauf- und Abbeizeigenschaften verwenden wie etwa Dispersionen von Poly(meth)acrylsäure, Polyvinylpyrrolidon sowie dessen Mischpolymerisate, Copolymerisate der Maleinsäure oder halbsynthetische Verbindungen auf Basis von Stärke, Cellulose (MC, CMC, Nitrocellulose) oder Guarderivate.

Zur Herstellung der erfindungsgemäßen Abbeizpasten werden die Bestandteile miteinander gemischt, wobei man zweckmäßig zunächst Monoalkylether des Diethylenglykols vorlegt und darin die freien Fettsäuren löst. Diese werden dann durch Zusatz von Natronlauge unter schwachem Erwärmen auf etwa 20 bis 50 °C in Lösung gebracht. Zweckmäßig gibt man hier auch das notwendige zusätzliche Wasser zu, so daß ein Wassergehalt in der fertigen Paste zwischen 5 und 30 Gew.-% erreicht wird. Nachdem unter Rühren und gegebenenfalls weitererem Erwärmen die homogene Mischung hergestellt worden ist, kann das fertige Gemisch in Gefäße abgefüllt werden.

Es handelt sich im vorliegenden Fall um eine durch die Natrumsalze der Fettsäuren verdickenden Paste und nicht um ein an sich bekanntes Gel von Natriumsalzen von Fettsäuren in hydrophilen organischen Lösungsmitteln.

Bei der Anwendung der vorliegenden Abbeizpasten werden diese in geeigneter Weise mit einem Pinsel oder Spatel auf die abzubeizenden Oberflächen aufgetragen und bei Raumtemperatur verschiedener Zeit einwirken gelassen. Je nach Widerstandsfähigkeit der Lack-, Dispersions- oder Klebstoffreste reicht eine Zeit zwischen 2 und 48 Stunden aus. Im allgemeinen wird man mit der Einwirkung über Nacht, d.h. einer Zeit von etwa 12 bis 15 Stunden die gewünschten Resultate erzielen. Die angeweichte Lackschicht kann dann mit einem dafür geeigneten Instrument, beispielsweise einem Stielspachtel abgeschoben werden. Anschließend werden die Reste der Abbeizpaste mit Wasser abgewaschen und getrocknet. Gegebenenfalls kann dann noch eine weitere mechanische Reinigung oder ein partieller zweiter Auftrag des Abbeizmittels erfolgen, bevor ein neuer Anstrich bzw. eine Lackfarbe aufgetragen wird.

<u>Herstellung von Abbeizmitteln</u> (Beispiele 1 bis 5)

In einem Rührgefäß wurden vorgelegt der Monoethylether von Diethylenglykol, das Additionsprodukt von 10 Mol Ethylenoxid an 1 Mol Oleylalkohol/Cetylalkohol-Gemisch sowie verschiedene Fettsäuren, und zwar Myristinsäure, Palmitinsäure, Stearinsäure. Dazu wurde dann die zur Neutralisation notwendige Menge an Natronlauge gegeben und 5 Minuten bei 40 °C gerührt.

Anschließend wurde unter weiterem Rühren gegebenenfalls weiteres Wasser oder sonstige Hilfsstoffe zugefügt. Nachdem die Mischung homogen geworden war, wurde in Blechdosen abgefüllt.

In der nachfolgenden Tabelle 1 ist in Abhängigkeit von der laufenden Nummer des Beispiels die Menge des Monoethylethers sowie des Ethylenoxidaddukts sowie die Fettsäure angegeben. Es folgen die eingesetzte Natronlauge und das Wasser sowie gegebenenfalls weitere Hilfsstoffe.

Tabelle 1

| Beispiel Nr. | Monoethylether | EO-Addukt | Fettsäure | Natronlauge | Wasser | Hilfsstoffe |
|---|---|---|---|---|---|---|
| 1 | 775 g | 20 g | 20 g Myristins. | 185 g 2,2 % | - | - |
| 2 | 775 g | 20 g | 20 g Palmitins. | 104 g 3,5 % | 81 g | - |
| 3 | 775 g | 20 g | 20 g Stearins. | 92 g 3,5 % | 92 g | - |
| 4 | 555 g | 18 g | 21 g Palmitins. | 85 g 4,0 % | 100 g | 20 g N<br>200 g M |
| 5 | 740 g | 22 g | je 10 g Palmitins. + Stearins. | 110 g 4,0 % | 90 g | 20 g P |

N = Nitrocellulose Typ 400
M = Monobutylether des Diethylenglykolacetats
P = 30 Gew.-% wäßrige Dispersion von Polymethacrylsäure

Abbeizbeispiele

Es wurden Lackanstriche auf Spanplatten 60 × 25 cm (senkrecht stehend) entfernt. Der Lack- bzw. Farbauftrag lag zwischen etwa 450 und 550 g Festsubstanz/m². Die Lack- bzw. Farbschichten wurden bis zur gewünschten Dicke etwa 6-10mal aufgetragen und jeweils 24 Stunden trocknen gelassen. Vor dem Auftragen des Abbeizmittels wurde das Probestück 36 Stunden bei 40 °C aufbewahrt.

In der nachfolgenden Tabelle 2 ist in Abhängigkeit von dem zu entfernenden Lack- bzw. Anstrichfilm die Zeit angegeben, bis die Schicht mit einem Stielspachtel vom Untergrund abgeschoben werden konnte. Die Einwirkungstemperatur des Abbeizmittels lag bei etwa 23/25 °C. In der letzten Spalte ist die Nummer des Beispiels angegeben, nach dem das Abbeizmittel hergestellt war.

## Tabelle 2

| | | | |
|---|---|---|---|
| Alkydharz | 12 | Stunden | Beispiel 1 |
| Nitrokombinationslack | 10 | Stunden | Beispiel 2 |
| Polyurethanlack | 2 1/2 | Stunden | Beispiel 3 |
| Polybutadienstyrollatex | 9 | Stunden | Beispiel 4 |
| Polyvinylacetat (Dispersion) | 8 | Stunden | Beispiel 5 |
| Polymethacrylatlatex | 15 | Stunden | Beispiel 3 |

Vergleichsversuche

a) Zum Vergleich wurde eine Mischung hergestellt aus 20 g Myristinsäure, 20 g des Ethylenoxidadduktes von 10 Mol EO an 1 Mol Oleylalkohol/Cetylalkoholgemisch, 775 g des Monoethylethers von Diethylenglykol, 170 g Wasser sowie 15 g Triethanolamin.
Diese Mischung konnte nicht zum Abbeizen von Anstrichen an senkrechten Flächen gebraucht werden, da sie aufgrund ihrer leichten Fließfähigkeit praktisch vollständig abfloß.

b) Zum Vergleich wurde im Beispiel 1 anstelle des Monoethylethers der Monomethylether von Diethylenglykol eingesetzt, wurde ein relativ leicht ablaufendes Mittel mit deutlich verminderter Abbeizwirkung erhalten.

## Patentansprüche

1. Abbeizpaste zum Entfernen von Lackschichten auf Basis von schwerflüchtigen wenigtoxischen Lösungsmitteln sowie Verdickungsmitteln auf Basis von Fettsäuresalzen, dadurch gekennzeichnet, daß sie besteht aus
a) 94 - 66, insbesondere 88 - 72 Gew.-% eines Diethylenglykolmonoalkylethers der allgemeinen Formel
$R - O - CH_2CH_2 - O - CH_2CH_2 - OH$,
wobei R ein Ethyl- oder Propylrest ist sowie
b) 1 - 4, insbesondere 1,5 - 3 Gew.-% des Natriumsalzes einer $C_{14}$-$C_{18}$-Fettsäure sowie
c) 5 - 30, insbesondere 10 - 25 Gew.-% Wasser und
d) gegebenenfalls bis zu 5 Gew.-% an nichtionogenen oder anionaktiven Netzmitteln und weiteren üblichen verdickenden Hilfsstoffen.

2. Verfahren zur Herstellung eines Abbeizmittels nach Patentanspruch 1, dadurch gekennzeichnet, daß man unter Rühren bei 10 - 50 °C die Bestandteile bis zur Bildung einer homogenen Mischung rührt und anschließend in die Gefäße abfüllt.

## Claims

1. A stripping paste for removing paint coatings based on substantially involatile, low-toxicity solvents and thickeners based on fatty acid salts, characterized in that it consists of
a) from 94 to 66 and more especially from 88 to 72% by weight of a diethylene glycol monoalkyl ether corresponding to the following general formula
$R–O–CH_2CH_2–O–CH_2CH_2–OH$
in which R is an ethyl or propyl group,
b) from 1 to 4 and more especially from 1.5 to 3% by weight of the sodium salt of a $C_{14-18}$ fatty acid,
c) from 5 to 30 and more especially from 10 to 25% by weight water and
d) optionally up to 5% by weight of nonionic or anion-ic wetting agents and other standard thickening auxiliaries.

2. A process for producing the stripping paste claimed in claim 1, characterized in that the constituents are stirred at 10 to 50°C until a homogenous mixture is formed and are then packed in containers.

## Revendications

1. Pâte décapante pour l'enlèvement de couches de peinture et de laque, à base de solvants peu volatils, peu toxiques, ainsi que d'épaississants à base de sels d'acides gras, caractérisée en ce qu'elle est constituée de:

a) 94–66, en particulier 88–72% en poids d'un éther monoalkylique de diéthylèneglycol, de formule générale:
$R-O-CH_2CH_2-O-CH_2CH_2-OH$
dans laquelle R est le groupe éthyle ou propyle, ainsi que;
b) 1–4, en particulier 1,5–3% en poids du sel de sodium d'un acide gras en $C_{14}-C_{18}$, ainsi que;
c) 5–30, en particulier 10–25% en poids d'eau et;
d) éventuellement jusqu'à 5% en poids d'agents mouillants non ioniques ou anioniques et d'autres substances auxiliaires épaississantes usuelles.

2. Procédé pour la préparation d'un décapant selon la revendication 1, caractérisé en ce que l'on mélange sous agitation les composants à 10–50°C, jusqu'à la formation d'un mélange homogène et on introduit ensuite celui-ci dans les récipients.